# EUROPEAN PATENT APPLICATION

(11) **EP 4 832 457 A1**
(43) Date of publication of application: **28.10.2026**
(21) Application number: 24925624.9
(22) Date of filing: 13.12.2024
(51) Int. Cl.: H04L 67/14

(54) **DEVICE PROCESSING METHOD AND SYSTEM, AND ELECTRONIC DEVICE AND STORAGE MEDIUM**

(30) Priority: 22.02.2024 CN 202410199063
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: BAO, Wenzhao, Ningbo, Zhejiang 315899 (CN); SHANG, Xin, Ningbo, Zhejiang 315899 (CN); JIANG, Zhe, Ningbo, Zhejiang 315899 (CN)
(74) Representative: Elzaburu S.L.P.
(86) International application number: PCT/CN2024/139287
(87) International publication number: WO 2025/175886

(57) **Abstract**

The present application relates to a device processing method and a system, and an electronic device and a storage medium. The method is applied to a server, and includes: obtaining device information of a first device; binding the device information of the first device with user information; configuring a first communication link between the first device and a first gateway based on platform-based function or service; and sending control information to the first gateway, so that the control information is sent to the first device for processing through the first communication link by the first gateway.

## Description

This application claims priority to Chinese patent application No. 202410199063.8 filed to the China National Intellectual Property Administration on February 22, 2024, the entire content of which is incorporated herein by reference.

### TECHNICAL FIELD

The present application relates to the technical field of Internet of Things (IoT), and in particular to a device processing method and a system, and an electronic device and a storage medium.

### BACKGROUND

With the rise of the Internet of Things (IoT), the IoT platform has increasingly strong differentiated demands for IoT devices, and users are paying more and more attention to the intelligence and functional diversity of the IoT. At present, the way the IoT platform connects to IoT devices is through integrated embedded development. After device suppliers complete development according to their respective protocols, they conduct development and joint debugging with the IoT platform. Due to inconsistent protocols implemented by different device suppliers, the IoT platform needs to connect to different device suppliers one by one, resulting in a sharp increase in the cycle and cost of connection between the IoT platform and IoT devices, which is not conducive to the rapid launch and promotion of products.

The above description is provided for general background information and does not necessarily constitute prior art.

### SUMMARY

In view of the above technical problems, the present application provides a device processing method and a system, and an electronic device and a storage medium. A communication link between a device and a gateway is configured through platform-based function or service, realizing the standardization of communication links, enabling flexible access to devices, and shortening the development cycle.

The present application provides a device processing method applied to a server, including the steps of:
obtaining device information of a first device;
binding the device information of the first device with user information;
configuring a first communication link between the first device and a first gateway based on platform-based function or service; and
sending control information to the first gateway, so that the control information is sent to the first device for processing through the first communication link by the first gateway.

In an embodiment, the method further includes:
configuring a second communication link between a second device and the first gateway based on the platform-based function or service; and
sending the control information to the first gateway, so that the control information is sent to the second device for processing through the second communication link by the first gateway.

In an embodiment, the method further includes at least one of the following:
configuring a third communication link between the second device and a second gateway based on the platform-based function or service; or
configuring a fourth communication link between the first device and a second gateway based on the platform-based function or service.

In an embodiment, the method further includes:
sending device information of the first device and/or the second device to a gateway not establishing a communication link with the first device and/or the second device or a designated gateway.

In an embodiment, the control information is obtained in at least one of the following ways:
being generated by the server in response to meeting a first preset condition;
being sent by a terminal;
control information from a terminal forwarded by the first gateway and/or the second gateway; or
control information from the first device and/or the second device forwarded by the first gateway and/or the second gateway.

In an embodiment, the sending control information includes:
obtaining the control information;
encrypting the control information; and
sending encrypted control information.

A device processing method applied to a gateway, including the steps of:
receiving control information; and
sending the control information to a device through a communication link configured based on platform-based function or service to process the device.

In an embodiment, the sending the control information to the device through the communication link configured based on the platform-based function or service to process the device includes:
encrypting the control information; and
sending encrypted control information to the device through the communication link configured based on platform-based function or service.

A device processing method applied to a terminal, including the steps of:
generating control information of a device based on platform-based function or service in response to meeting a second preset condition; and
sending the control information to a gateway and/or a server, where a communication link is configured between the gateway and the device based on platform-based function or service.

In an embodiment, the method further includes:
displaying a first interface, where the first interface is configured to display information of at least one gateway;
displaying a device list establishing the communication link with the gateway in response to an operation of selecting the gateway; and
displaying a device control interface in response to an operation of selecting the device.

In an embodiment, the displaying the first interface includes at least one of:
displaying information of the gateway bound to the terminal in sequence on the first interface according to an usage frequency of the gateway;
displaying information of the gateway bound to the terminal in sequence on the first interface according to a local area network where the terminal is located;
displaying information of the gateway bound to the terminal in sequence on the first interface according to a security of the gateway; or
displaying information of the gateway bound to the terminal in sequence on the first interface according to scene information.

In an embodiment, the meeting the second preset condition includes:
a change in a near field communication mode between the terminal and the gateway;
a mismatch between a working scenario of the device and a device priority;
a power consumption of the device exceeding a preset power consumption threshold; and
a current scenario being a preset scenario.

A device processing method applied to a device, including the steps of:
receiving first control information through a communication link configured based on platform-based function or service; and
invoking the platform-based function or service to process the first control information and execute a corresponding instruction.

In an embodiment, the method further includes:
receiving a preset operation, and generating second control information of another device based on the platform-based function or service; and
sending the second control information to the gateway.

A device processing system includes: a server, a terminal, a gateway and a device, where
the server is configured to obtain device information of the device, bind the device information of the device with user information, and send control information to the gateway;
the gateway is configured to receive the control information and send the control information to the device through the communication link;
the terminal is configured to generate the control information of the device based on the platform-based function or service and send the control information to the gateway and/or the server; and
the device is configured to receive the control information, invoke the platform-based function or service to process the control information and execute a corresponding instruction.

An electronic device, where the server includes: a memory storing a processing program and a processor, where the processing program, when executed by the processor, implements the steps of the device processing method according to any one of the above.

A storage medium, where the storage medium stores a computer program, and the computer program, when executed by a processor, implements the steps of the device processing method according to any one of the above.

As described above, the device processing method of the present application applied to the server includes the steps of: obtaining device information of a first device; binding the device information of the first device with user information; configuring a first communication link between the first device and a first gateway based on platform-based function or service; and sending control information to the first gateway, so that the control information is sent to the first device for processing through the first communication link by the first gateway. The technical solution of the present application configures the communication link between a device and a gateway through platform-based function or service, realizes the standardization of communication links, enables flexible access to devices, and shortens the development cycle.

### BRIEF DESCRIPTION OF THE DRAWINGS

The accompanying drawings, which are incorporated in and constitute a part of this specification, illustrate embodiments consistent with the present application and, together with the description, serve to explain the principles of the present application. To more clearly illustrate the technical solutions of the embodiments of the present application, the following briefly introduces the accompanying drawings used in the description of the embodiments. Obviously, for those skilled in the art, other drawings may be obtained based on these drawings without creative efforts.
FIG. 1 is an architectural diagram of a device processing system provided by an embodiment of the present application.
FIG. 2 is an architectural diagram of the device processing system provided by another embodiment of the present application.
FIG. 3 is a schematic flowchart of a device processing method according to an embodiment.
FIG. 4 is a schematic flowchart of the device processing method according to another embodiment.
FIG. 5 is a schematic flowchart of the device processing method according to yet another embodiment.
FIG. 6 is a schematic flowchart of the device processing method according to a further embodiment.

The implementation of the objectives, functional features and advantages of the present application will be further described with reference to the embodiments and the accompanying drawings. The explicit embodiments of the present application have been shown through the above accompanying drawings, and will be described in more detail hereinafter. These accompanying drawings and text descriptions are not intended to limit the scope of the concept of the present application in any way, but to illustrate the concept of the present application for those skilled in the art with reference to specific embodiments.

### DETAILED DESCRIPTION OF THE EMBODIMENTS

Exemplary embodiments will be described in detail herein, examples of which are illustrated in the accompanying drawings. When the following description refers to the accompanying drawings, the same numerals in different drawings represent the same or similar elements unless otherwise indicated. The implementations described in the following exemplary embodiments do not represent all implementations consistent with the present application. On the contrary, they are merely examples of apparatuses and methods consistent with some aspects of the present application as recited in the appended claims.

It should be noted that, as used herein, the terms "comprise", "include" or any other variation thereof are intended to cover a non-exclusive inclusion, such that a process, method, article or apparatus that includes a list of elements includes not only those elements but also other elements not expressly listed, or elements inherent to such process, method, article or apparatus. Without further limitation, an element defined by the statement "including a..." does not exclude the presence of other identical elements in the process, method, article or apparatus including the element, and/or components, features and elements with the same name in different embodiments of the present application may have the same meaning or different meanings, and the specific meaning thereof shall be determined with reference to the explanation in the specific embodiment or further in combination with the context of the specific embodiment.

It should be understood that although the terms first, second, third, etc. may be used herein to describe various information, such information should not be limited to these terms. These terms are only used to distinguish information of the same type from each other. For example, without departing from the scope of the present application, the first information may also be referred to as the second information, and similarly, the second information may also be referred to as the first information. Depending on the context, the word "if" as used herein may be interpreted as "when" or "upon" or "in response to determining". Furthermore, as used herein, the singular forms "a", "an" and "the" are intended to include the plural forms as well, unless the context clearly indicates otherwise. It should be further understood that the terms "comprise", "include" indicate the presence of stated features, steps, operations, elements, components, items, categories and/or groups, but do not exclude the presence or addition of one or more other features, steps, operations, elements, components, items, categories and/or groups. The terms "or", "and/or", "include at least one of the following" and the like used in the present application may be interpreted as inclusive, or mean any one or any combination. For example, "include at least one of the following: A, B, C" means "any one of the following: A; B; C; A and B; A and C; B and C; A and B and C", and for another example, "A, B or C" or "A, B and/or C" means "any one of the following: A; B; C; A and B; A and C; B and C; A and B and C". The definition shall be subject to the exception only when the combination of elements, functions, steps or operations is inherently mutually exclusive in some way.

Although the steps in the flowcharts of the embodiments of the present application are shown in sequence as indicated by the arrows, these steps are not necessarily executed in the sequence indicated by the arrows. Unless explicitly stated herein, the execution of these steps is not strictly limited and can be executed in other sequences. Moreover, at least part of the steps may include multiple sub-steps or multiple stages, which are not necessarily executed and completed at the same time, but can be executed at different times. The execution sequence thereof is not necessarily sequential, but can be performed alternately or alternately with at least part of the sub-steps or stages of other steps or other steps.

Depending on the context, the words "if", "when" as used herein may be interpreted as "when" or "upon" or "in response to determining" or "in response to detecting". Similarly, depending on the context, the phrases "if determined" or "if detected (stated condition or event)" may be interpreted as "when determined" or "in response to determining" or "when detected (stated condition or event)" or "in response to detecting (stated condition or event)".

It should be noted that step codes such as S1 and S2 are used herein for the purpose of more clearly and briefly describing the corresponding content, and do not constitute a substantial limitation on the sequence. Those skilled in the art may execute S2 first and then S1 in specific implementation, and all these shall fall within the scope of the present application.

It should be understood that the specific embodiments described herein are only used to explain the present application and not to limit the present application.

In the following description, the use of suffixes such as "module", "part" or "unit" for representing elements is only for facilitating the description of the present application and has no specific meaning in itself. Therefore, "module", "part" or "unit" can be used mixedly.

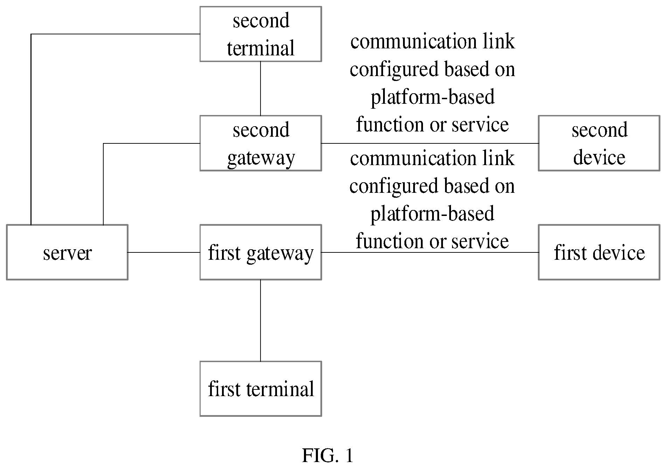

Referring to FIG. 1, a device processing system includes: a server, a terminal, a gateway and a device, where the gateway is connected to the device through a communication link configured based on platform-based function or service.

The server is configured to obtain device information of the device, bind the device information of the device with user information, and send control information to the gateway.

The gateway is configured to receive the control information and send the control information to the device through the communication link.

The terminal is configured to generate the control information of the device based on the platform-based function or service and send the control information to the gateway and/or the server.

The device is configured to receive the control information, invoke the platform-based function or service to process the control information and execute a corresponding instruction.

The platform-based function or service is implemented in the form of a software development kit (SDK), has the feature of plug-in, and can be quickly integrated in a device, a gateway, a terminal application or a service. Through platform-based function or service, a new platform-based protocol can be architected on the communication protocol for data communication, and a unified communication port can be provided, realizing the standardization of communication links. Thus, devices integrated with platform-based function or service can be flexibly connected to the IoT system. For the IoT platform and IoT device suppliers, there is no need for or reduction of device joint debugging work, shortening the development cycle. For users, they can flexibly select devices to realize the functions they want, meeting rich and intelligent use requirements.

In an embodiment, the platform-based function or service is implemented in the form of an SDK, and its function upgrade can be performed by means of over-the-air technology (OTA) without manually upgrading terminal applications and devices, which is more convenient.

In an embodiment, the platform-based protocol architected through the platform-based function or service adopts triple authentication of key, national cryptographic algorithm, and chip to ensure data and link security.

In an embodiment, the gateway, as an IoT platform, may be one or more, for example, including a first gateway and a second gateway. The first gateway and the second gateway may be configured in different application spaces. For example, the first gateway is a vehicle-mounted gateway, and the second gateway is a home gateway.

In an embodiment, the terminal may be one or more, for example, including a first terminal and a second terminal. The first terminal and the second terminal may be different types of terminals. For example, the first terminal is a vehicle-mounted terminal, or a digital cockpit system, and the second terminal is a mobile terminal. The first terminal and the second terminal may be one or more.

In an embodiment, the device is an IoT device, which may be one or more, for example, including a first device and a second device. Based on the platform-based function or service, the device can be connected to different gateways. For example, the first device can be connected to the first gateway and/or the second gateway, and the second device can also be connected to the first gateway and/or the second gateway. The same device can also switch connections between the first gateway and the second gateway, so that the first device and the second device can be the same device. Through platform-based function or service and gateways configured in different application spaces, users can conveniently use the same device in different scenes. For example, the same Bluetooth speaker can be used at home to listen to music, and can also be used in a car to listen to music or answer calls.

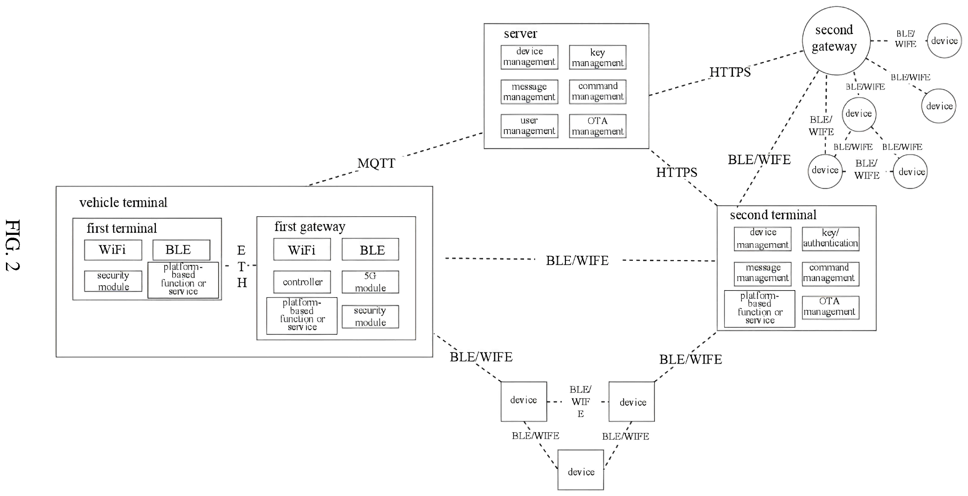

Referring to FIG. 2, taking the scenario of automotive IoT as an example, each module of the system architecture of the present application is introduced.

The vehicle end includes a first gateway and a first terminal, and the first gateway performs data interaction with the first terminal through an Ethernet gateway module (ETH).

The first gateway (e.g., TCAM) is a communication module, including a Wi-Fi module, a BLE module, a 4G/5G communication module, an SE security module, a platform-based function or service SDK and a controller. The first terminal (e.g., DHU) includes a Wi-Fi module, a BLE module, an SE security module and a platform-based function or service SDK.

The Wi-Fi module is a Wi-Fi hardware unit, and the platform-based function or service SDK is architected on the Wi-Fi module.

The BLE module is a BLE hardware unit. The BLE is dual-mode composed of classic Bluetooth and low energy Bluetooth, which performs big data application transmission (e.g., Bluetooth music) through classic Bluetooth and low-power interaction (e.g., RPA) through low energy Bluetooth. The platform-based function or service SDK is a program architected on the BLE module, and can implement BLE MESH protocol, BLE protocol and ZIGBEE protocol.

The 4G/5G communication module is a cellular network communication hardware unit, which includes 4G and 5G communication modules.

SE is a security module. In an embodiment, all chips adopted by the security module are security chips implementing national cryptographic algorithm (SM1), and all encryption algorithms therein adopt national cryptographic algorithm, realizing localization while ensuring link and data security. In an embodiment, the security module may also adopt other encryption algorithms suitable for IoT data encryption, such as RSA or ECC encryption algorithms.

The server includes a device management service, a key management service, a message management service, a command management service, a user management service and an OTA management service.

The device management service is configured to process device information bound with user information; process relevant information of devices of device suppliers, and manage relevant information of user devices and device binding; perform device authentication and device ownership management, and provide a visualized UI information management interface and data report service. The key management service is configured to provide key download, authentication, encryption and decryption functions. In an embodiment, all encryption and decryption functions provided adopt national secret encryption and decryption technology, but are not limited thereto, and international encryption technology may also be adopted. The message management service is configured to provide message access, push, message link management and message channel management. The command management service performs command management relying on the message management service, and commands are divided into remote command and near field command, including command types and command sets. The user management service is configured to manage relevant information of users, and is responsible for user login, logout and authentication. The OTA management service is configured to perform remote OTA upgrade on devices, TCAM gateway, terminal DHU and application programs, including installation package management, file system, version management, load balancing, etc.

The first terminal is loaded with an application program, including a device management module, a key authentication module, a message management module, a command management module and an OTA management module.

The device management module is configured to perform device information entry, binding and protocol network configuration. The key authentication module is configured to perform user identity authentication of logged-in users, encryption and decryption of information, and download and identification of certificates. The message management module is configured to receive messages from the server, the first gateway, the second gateway and devices, perform message push and management, encryption and decryption of messages, and establishment of secure channel. The command management module is configured to send and receive commands and display UI of commands. The User management module is configured to perform device user management and sharing management. The OTA management module is configured to upgrade the first gateway and devices through BLE/Wi-Fi, and receive upgrade packages from the server to upgrade itself.

The second gateway Home GW is configured with a platform-based function or service SDK and has the ability to access the network, through which long-distance IoT functions can be realized.

The device includes an IoT device establishing a communication link with the first gateway and/or the second gateway. The device is an IoT device connected with a platform-based function or service SDK, such as speakers, lamps, air conditioners, air purifiers, etc. The device supports either the BLE or Wi-Fi protocol, and may integrate one of 4G or 5G for cellular network access. Upon receiving a message, the device invokes the platform-based function or service SDK to perform decryption and execute the instruction.

The above system achieves platformization through the platform-based function or service SDK with a set of protocols, encryption algorithms and a unified communication port. Vehicle owners and shared users can control and operate IoT devices in a near field communication (NFC) or remote manner via applications on mobile terminals and DHU applications.

The following embodiments describe the device processing method implemented based on the system architecture shown in FIG. 1 or FIG. 2.

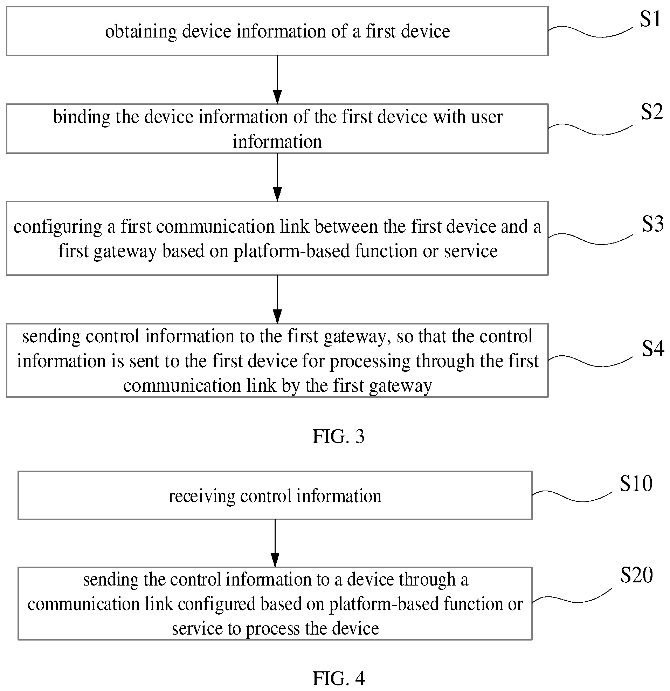

Referring to FIG. 3, a device processing method applied to a server includes the following steps:
S1, obtaining device information of a first device;
S2, binding the device information of the first device with user information;
S3, configuring a first communication link between the first device and a first gateway based on platform-based function or service; and
S4, sending control information to the first gateway, so that the control information is sent to the first device for processing through the first communication link by the first gateway.

In an embodiment, after the first device is integrated with platform-based function or service, a user may scan the QR code on the first device or enter the VIN code for entry through the device management function on the terminal application, and the terminal submits the information to the device management module of the server to bind user information with device information. Alternatively, the binding between user information and device information may be performed by manually entering information through the management platform interface of the device management function of the server.

Thereafter, the first communication link between the first device and the first gateway is configured, i.e., protocol network configuration of the device is performed. During network configuration, the device information and gateway information are obtained through the message management module of the terminal application, the hardware of the first device and the hardware of the first gateway are analyzed and determined through the device management module to select the most appropriate link, and then the link is configured based on platform-based function or service. For example, the BLE link is selected if the first device only supports BLE, the Wi-Fi link is selected if the first device only supports the Wi-Fi link, and the BLE link is preferentially selected if the first device supports both Wi-Fi and BLE. After the link is selected, relevant configurations are uploaded to the server to complete the configuration of the first communication link.

Taking the first gateway as a TCAM as an example, a user may scan the QR code on the first device or enter the VIN code for entry through an application on a mobile terminal, upload the information to the server to bind device information with user information (e.g., the vehicle owner), then obtain the device information and gateway information through the message management module of the application and send them to the server, and configure the communication link between the first device and the first gateway according to the device information and gateway information.

Thereafter, after the user successfully logs in to the App on the mobile terminal or the APP on the vehicle-mounted terminal DHU, the user may operate the first device. For example, communication is performed through one of HTTPS/BLE/WI-FI/MQTT based on the message management function of the App on the mobile terminal. The communication link is selected as follows: a near field communication link is selected if the mobile terminal is within the near field communication range of the first gateway, and 4G/5G network communication is adopted if the mobile terminal is beyond the near field communication range.

In an embodiment, in step S4, sending control information includes:
obtaining the control information;
encrypting the control information; and
sending encrypted control information.

In an embodiment, sending the control information after encryption ensures the security of the link and data on the basis of realizing platformization. In an embodiment, upon receiving information, the server invokes the key management service to decrypt the information, perform calculation, and then encrypt the information again. The server delivers the information to the TCAM gateway at the vehicle end based on the MQTT protocol, and delivers the information to the terminal application through the HTTPS protocol. In an embodiment, the control information is encrypted based on the national cryptographic algorithm (SM1), realizing localization while ensuring the security of the link and data. In an embodiment, other encryption algorithms suitable for IoT data encryption may also be adopted, such as RSA or ECC encryption algorithms.

In an embodiment, the method further includes:
configuring a second communication link between a second device and the first gateway based on the platform-based function or service; and
sending the control information to the first gateway, so that the control information is sent to the second device for processing through the second communication link by the first gateway.

In an embodiment, the first gateway may also establish a communication link with the second device to realize control over the second device, thereby enriching the functions of the IoT platform. The process of establishing the second communication link between the first gateway and the second device refers to the above process of establishing the first communication link, and will not be repeated here.

In an embodiment, the method further includes at least one of the following:
configuring a third communication link between the second device and a second gateway based on the platform-based function or service; or
configuring a fourth communication link between the first device and a second gateway based on the platform-based function or service.

In an embodiment, the first device and the second device may establish a communication link with the second gateway before or after establishing a communication link with the first gateway. Since the communication link between the device and the gateway is configured based on platform-based function or service, the device can be flexibly accessed between different gateways, improving the convenience of using IoT devices.

In an embodiment, the method further includes:
sending device information of the first device and/or the second device to a gateway not establishing a communication link with the first device and/or the second device or a designated gateway.

In an embodiment, after the first device and/or the second device is connected to the current gateway, the device information may be sent to a gateway that has not established a communication link with the first device and/or the second device or a designated gateway, so that the first device and/or the second device can access other gateways more quickly subsequently. The gateway that has not established a communication link with the first device and/or the second device may be the first gateway, the second gateway, or a third gateway. The designated gateway may be designated by the user or determined according to the application scenario of the device. For example, if the device connected to the current gateway is a vehicle-mounted refrigerator, the application scenario of the device is vehicle-mounted, and the designated gateway may be determined as the vehicle-mounted gateway bound with user information.

In an embodiment, the control information is obtained in at least one of the following ways:
being generated by the server in response to meeting a first preset condition;
being sent by a terminal;
control information from a terminal forwarded by the first gateway and/or the second gateway; or
control information from the first device and/or the second device forwarded by the first gateway and/or the second gateway.

In an embodiment, meeting the first preset condition may include at least one of the following:
the time being a preset time; or
the working data of the device meeting the control condition.

In an embodiment, scenarios where control information is generated when the time is a preset time include turning on, turning off, adjusting temperature, adjusting humidity, vehicle preheating, adjusting seat temperature, etc. at a specified time. Scenarios where control information is generated when the working data of the device meets the control condition include cases where the working duration reaches a preset duration, a fault occurs, data download is completed, etc.

In an embodiment, when the control information is sent by a terminal, in one scenario, the mobile terminal communicates with the gateway via 4G/5G network. The mobile terminal encrypts the control information and sends the control information to the server through the message management function. After receiving the information from the terminal, the message management service of the server invokes the key management service to decrypt the message, perform calculation, encrypt the message again, and deliver the message to the first gateway or the second gateway through the MQTT protocol or HTTPS protocol.

In one scenario, when the mobile terminal communicates with the gateway via near field communication, the mobile terminal encrypts the control information and sends the control information to the server through the TCAM link by invoking the message management function of the application. After receiving the control message, the message management service of the server invokes the key management service of the server to decrypt the message, perform calculation, encrypt the message again, and deliver the message to the first gateway or the second gateway through the MQTT protocol or HTTPS protocol.

In one scenario, the terminal is a vehicle-mounted terminal DHU. The DHU application invokes platform-based function or service to forward the message to the vehicle-mounted network TCAM through the ETH link. The TCAM gateway then encrypts the message through the SE security module and sends it to the device. Upon receiving the message, the device invokes platform-based function or service to decrypt the message and execute the instruction.

When a user inputs control information through the first device or the second device, the first gateway and/or the second gateway forwards the control information from the first device and/or the second device, and other devices can be controlled through the control information. For example, a user inputs control information through a speaker at home, and the control information can be used to control devices on the vehicle, such as controlling vehicle charging and vehicle preheating.

In an embodiment, each device supports at least one of BLE and Wi-Fi for communication. If a device does not support 4G/5G, one of the BLE or Wi-Fi link is selected as the communication link between the device and the gateway. The gateway forwards the instruction to the device through BLE or Wi-Fi, and the device invokes platform-based function or service to decrypt the instruction and execute the instruction. If a device supports 4G/5G, the device may exchange information with the server through MQTT protocol. In an embodiment, the instruction of the terminal needs to be forwarded to the device through the gateway, and only protocol network configuration is performed between the terminal and the device, without execution of near field communication (BLE/WI-FI) instructions.

As described above, the device processing method of the present application configures the communication link between the device and the gateway through platform-based function or service, realizes the standardization of communication links, enables flexible access to devices, enriches the functions of the IoT platform, and shortens the development cycle.

Referring to FIG. 4, a device processing method applied to a gateway includes the following steps:
S10, receiving control information; and
S20, sending the control information to a device through a communication link configured based on platform-based function or service to process the device.

The gateway and the device are configured with platform-based function or service, and a communication link is pre-configured based on platform-based function or service. The method of configuring the communication link is the same as that in the previous embodiment, and will not be repeated here.

The device is an IoT device. In an embodiment, the control information comes from a terminal, a server or other IoT devices. In an embodiment, the terminal may be a mobile terminal or a vehicle-mounted terminal. For a mobile terminal, if the mobile terminal communicates with the gateway via 4G/5G network, the mobile terminal encrypts the control information and sends the control information to the server through the message management function. After receiving the information from the terminal, the message management service of the server invokes the key management service to decrypt the message, perform calculation, encrypt the message again, and deliver the message to the gateway through the MQTT protocol or HTTPS protocol. If the mobile terminal communicates with the gateway via near field communication, the mobile terminal encrypts the control information and sends the control information to the server through the gateway. After receiving the control message, the message management service of the server invokes the key management service of the server to decrypt the message, perform calculation, encrypt the message again, and deliver the message to the gateway through the MQTT protocol or HTTPS protocol.

In an embodiment, sending the control information to the device through the communication link configured based on the platform-based function or service includes:
encrypting the control information; and
sending encrypted control information to the device through the communication link configured based on platform-based function or service.

Sending the control information after encryption ensures the security of the link and data on the basis of realizing platformization. In an embodiment, the control information is encrypted based on the national cryptographic algorithm (SM1), realizing localization while ensuring the security of the link and data. In an embodiment, other encryption algorithms suitable for IoT data encryption may also be adopted, such as RSA or ECC encryption algorithms.

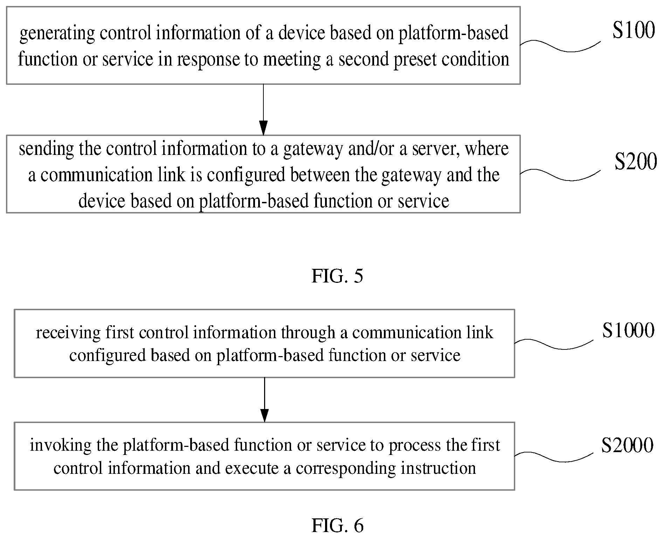

Referring to FIG. 5, a device processing method applied to a terminal includes the following steps:
S100, generating control information of a device based on platform-based function or service in response to meeting a second preset condition; and
S200, sending the control information to a gateway and/or a server, where a communication link is configured between the gateway and the device based on platform-based function or service.

In an embodiment, meeting the second preset condition includes:
a change in a near field communication mode between the terminal and the gateway;
a mismatch between a working scenario of the device and a device priority;
a power consumption of the device exceeding a preset power consumption threshold; and
a current scenario being a preset scenario.

In an embodiment, a change in the near field communication mode between the terminal and the gateway includes switching of the gateway communicating with the terminal. At this time, the control information may be used to wake up a device connected to the switched gateway, sleep a device connected to the gateway before switching, and change monitoring conditions (e.g., monitoring interval) of devices connected to the gateways before and after switching. A change in the near field communication mode between the terminal and the gateway may also include a change in the communication link between the terminal and the gateway, e.g., switching from BLE to Wi-Fi, and the control information may be used to switch the communication link between the device and the gateway to Wi-Fi.

In an embodiment, the working scenario of the device mismatches with the device priority. For example, when answering a call from a specific contact, the priority of earphone A is higher than that of speaker B. Therefore, when speaker B is used to answer the call, the control information is sent to switch the call to earphone A for answering or control speaker B not to respond to the call.

In an embodiment, when the power consumption of the device exceeds a preset power consumption threshold, the control information may be used, for example, to switch the working mode or information transmission mode of the device to save power consumption. In an embodiment, when the current scenario is a preset scenario, for example, in a navigation scenario, a higher-volume voice prompt is given for important intersections; in a low-temperature scenario, the vehicle is controlled to perform vehicle preheating at a certain interval.

In an embodiment, the method further includes:
displaying a first interface, where the first interface is configured to display information of at least one gateway;
displaying a device list establishing the communication link with the gateway in response to an operation of selecting the gateway; and
displaying a device control interface in response to an operation of selecting the device.

In an embodiment, on the operation interface, a user can switch bound gateways and control devices connected to each gateway. A list of devices connected to the gateway is displayed on the interface corresponding to each gateway, and the user can further select to enter the device control interface of the corresponding device to perform processing such as message viewing, status viewing and control operations.

In an embodiment, displaying the first interface includes at least one of the following:
displaying information of the gateway bound to the terminal in sequence on the first interface according to an usage frequency of the gateway;
displaying information of the gateway bound to the terminal in sequence on the first interface according to a local area network where the terminal is located;
displaying information of the gateway bound to the terminal in sequence on the first interface according to a security of the gateway; or
displaying information of the gateway bound to the terminal in sequence on the first interface according to scene information.

In an embodiment, on the first interface, gateways with higher usage frequency, gateways located in the local area network where the terminal is located, gateways with higher security, and gateways consistent with the current scenario are arranged in a forward order for user operation and improved operation security. In an embodiment, gateways with security lower than a threshold may be hidden or displayed with a non-operable identifier. In an embodiment, the current scenario may be determined according to the location of the terminal, the current time or user habits. For example, if the current time is off-duty time and the location of the terminal is approaching home, the scenario is determined as going home, and the home gateway is arranged in a forward order for the user to control home devices conveniently.

Referring to FIG. 6, a device processing method applied to a device includes the following steps:
S1000, receiving first control information through a communication link configured based on platform-based function or service; and
S2000, invoking the platform-based function or service to process the first control information and execute a corresponding instruction.

The gateway and the device are configured with platform-based function or service, and a communication link is pre-configured based on platform-based function or service. The method of configuring the communication link is the same as that in the previous embodiment, and will not be repeated here.

In an embodiment, the method further includes:
receiving a preset operation, and generating second control information of another device based on the platform-based function or service; and
sending the second control information to the gateway.

In an embodiment, a user may operate a device to enable the device to generate second control information of another device, and the second control information is sent through the gateway to another device that has established a communication link for execution. For example, a user inputs an instruction to control a vehicle-mounted purifier through a speaker at home to turn on or off the vehicle-mounted purifier. Thus, based on platform-based function or service, the integration of vehicle-mounted scenarios with home scenarios and mobile scenarios is realized, making IoT functions more convenient and abundant.

An electronic device, where the server includes: a memory and a processor. The memory stores a processing program, and the processing program, when executed by the processor, implements the steps of the device processing method according to any one of the above.

A storage medium storing a computer program, and the computer program, when executed by a processor, implements the steps of the device processing method according to any one of the above.

The embodiments of the electronic device and the storage medium provided in the present application may include all the technical features of any one of the above embodiments of the device processing method. The expansion and explanation of the specification are basically the same as those of each embodiment of the above method, and will not be repeated here.

An embodiment of the present application further provides a computer program product including computer program code, which, when run on a computer, causes the computer to execute the method in various possible implementations as above.

An embodiment of the present application further provides a chip including a memory and a processor, where the memory is used for storing a computer program, and the processor is used for calling and running the computer program from the memory, so that a device installed with the chip executes the method in various possible implementations as above.

The above scenarios are merely examples and do not limit the application scenarios of the technical solutions provided in the embodiments of the present application. The technical solutions of the present application may also be applied to other scenarios. For example, those skilled in the art may know that with the evolution of the system architecture and the emergence of new service scenarios, the technical solutions provided in the embodiments of the present application are also applicable to similar technical problems.

The serial numbers of the embodiments of the present application are for description only and do not represent the advantages or disadvantages of the embodiments.

The steps in the method of the embodiments of the present application may be adjusted, combined and deleted according to actual needs.

The units in the device of the embodiments of the present application may be combined, divided and deleted according to actual needs.

In the present application, descriptions of the same or similar terms, concepts, technical solutions and/or application scenarios are generally described in detail only when they first appear, and are generally not repeated for brevity when they appear again. When understanding the content such as the technical solutions of the present application, reference may be made to the relevant detailed descriptions above for the same or similar terms, concepts, technical solutions and/or application scenario descriptions that are not described in detail later.

In the present application, the description of each embodiment focuses on its own aspects, and parts that are not described or recorded in detail in a certain embodiment may refer to the relevant descriptions of other embodiments.

The technical features of the technical solutions of the present application may be combined arbitrarily. For brevity of description, all possible combinations of the technical features in the above embodiments are not described. However, as long as there is no contradiction in the combination of these technical features, they shall be deemed to fall within the scope recorded in the present application.

From the above description of the embodiments, those skilled in the art can clearly understand that the method of the above embodiments can be implemented by means of software plus a necessary general hardware platform, and of course, can also be implemented by hardware, but in many cases, the former is a better implementation. Based on such understanding, the technical solutions of the present application essentially or the part contributing to the prior art may be embodied in the form of a software product, which is stored in a storage medium as described above (such as ROM/RAM, magnetic disk, optical disk) and includes several instructions to enable a terminal device (which may be a mobile phone, a computer, a server, a controlled terminal, or a network device, etc.) to execute the method of each embodiment of the present application.

In the above embodiments, the implementation may be wholly or partially realized by software, hardware, firmware or any combination thereof. When implemented by software, it may be wholly or partially realized in the form of a computer program product. The computer program product includes one or more computer instructions. When the computer program instructions are loaded and executed on a computer, the processes or functions according to the embodiments of the present application are generated wholly or partially. The computer may be a general-purpose computer, a special-purpose computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, server or data center to another website, computer, server or data center via a wired (such as coaxial cable, optical fiber, digital subscriber line) or wireless (such as infrared, wireless, microwave) manner. The computer-readable storage medium may be any available medium that can be accessed by a computer or a data storage device such as a server or data center integrated with one or more available media. The available medium may be a magnetic medium (such as a floppy disk, storage disk, magnetic tape), an optical medium (such as a DVD), or a semiconductor medium (such as a solid state disk (SSD)).

The above are merely embodiments of the present application, and are not intended to limit the scope of the present application. Any equivalent structure or equivalent process transformation made through the contents of the description and drawings of the present application, or directly or indirectly applied to other related technical fields, shall be included in the scope of the present application.

## Claims

1. A device processing method applied to a server, **characterized by** comprising:
obtaining device information of a first device;
binding the device information of the first device with user information;
configuring a first communication link between the first device and a first gateway based on platform-based function or service; and
sending control information to the first gateway, so that the control information is sent to the first device for processing through the first communication link by the first gateway.

2. The method according to claim 1, further comprising:
configuring a second communication link between a second device and the first gateway based on the platform-based function or service; and
sending the control information to the first gateway, so that the control information is sent to the second device for processing through the second communication link by the first gateway.

3. The method according to claim 2, further comprising at least one of:
configuring a third communication link between the second device and a second gateway based on the platform-based function or service; or
configuring a fourth communication link between the first device and a second gateway based on the platform-based function or service.

4. The method according to claim 3, further comprising:
sending device information of the first device and/or the second device to a gateway not establishing a communication link with the first device and/or the second device or a designated gateway.

5. The method according to claim 3, wherein the control information is obtained by at least one of:
being generated by the server in response to meeting a first preset condition;
being sent by a terminal;
control information from a terminal forwarded by the first gateway and/or the second gateway; or
control information from the first device and/or the second device forwarded by the first gateway and/or the second gateway.

6. The method according to claim 1 or 2, wherein the sending the control information comprises:
obtaining the control information;
encrypting the control information; and
sending encrypted control information.

7. A device processing method applied to a gateway, **characterized by** comprising:
receiving control information; and
sending the control information to a device through a communication link configured based on platform-based function or service to process the device.

8. The method according to claim 7, wherein the sending the control information to the device through the communication link configured based on the platform-based function or service to process the device comprises:
encrypting the control information; and
sending encrypted control information to the device through the communication link configured based on platform-based function or service.

9. A device processing method applied to a terminal, **characterized by** comprising:
generating control information of a device based on platform-based function or service in response to meeting a second preset condition; and
sending the control information to a gateway and/or a server, wherein a communication link is configured between the gateway and the device based on platform-based function or service.

10. The method according to claim 9, further comprising:
displaying a first interface, wherein the first interface is configured to display information of at least one gateway;
displaying a device list establishing the communication link with the gateway in response to an operation of selecting the gateway; and
displaying a device control interface in response to an operation of selecting the device.

11. The method according to claim 10, wherein the displaying the first interface comprises at least one of:
displaying information of the gateway bound to the terminal in sequence on the first interface according to an usage frequency of the gateway;
displaying information of the gateway bound to the terminal in sequence on the first interface according to a local area network where the terminal is located;
displaying information of the gateway bound to the terminal in sequence on the first interface according to a security of the gateway; or
displaying information of the gateway bound to the terminal in sequence on the first interface according to scene information.

12. The method according to claim 9, wherein the meeting the second preset condition comprises:
a change in a near field communication mode between the terminal and the gateway;
a mismatch between a working scenario of the device and a device priority;
a power consumption of the device exceeding a preset power consumption threshold; and
a current scenario being a preset scenario.

13. A device processing method applied to a device, **characterized by** comprising:
receiving first control information through a communication link configured based on platform-based function or service; and
invoking the platform-based function or service to process the first control information and execute a corresponding instruction.

14. The method according to claim 11, further comprising:
receiving a preset operation, and generating second control information of another device based on the platform-based function or service; and
sending the second control information to the gateway.

15. A device processing system, **characterized by** comprising: a server, a terminal, a gateway and a device, wherein
the gateway is connected to the device through a communication link configured based on platform-based function or service;
the server is configured to obtain device information of the device, bind the device information of the device with user information, and send control information to the gateway;
the gateway is configured to receive the control information and send the control information to the device through the communication link;
the terminal is configured to generate the control information of the device based on the platform-based function or service and send the control information to the gateway and/or the server; and
the device is configured to receive the control information, invoke the platform-based function or service to process the control information and execute a corresponding instruction.

16. An electronic device, **characterized in that** the server comprises: a memory storing a processing program and a processor, wherein the processing program, when executed by the processor, implements the steps of the device processing method according to any one of claims 1 to 14.

17. A storage medium storing a computer program, **characterized in that**, the computer program, when executed by a processor, implements the steps of the device processing method according to any one of claims 1 to 14.
